# EUROPEAN PATENT APPLICATION

(11) **EP 4 527 969 A1**
(43) Date of publication of application: **26.03.2025**
(21) Application number: 23825742.2
(22) Date of filing: 06.01.2023
(51) Int. Cl.: C22C 38/08, C21D 1/18

(54) **HOT WORK DIE STEEL AND HEAT TREATMENT METHOD THEREFOR, AND HOT WORK DIE**

(30) Priority: 21.06.2022 CN 202210703843
(71) Applicant: Ironovation Materials Technology Co., Ltd., Suzhou, Jiangsu 215000 (CN)
(72) Inventor: YI, Hongliang, Shenyang, Liaoning 110819 (CN); LIU, Lianqian, Suzhou, Jiangsu 215000 (CN); LU, Fumin, Suzhou, Jiangsu 215000 (CN); ZHANG, Xuejie, Suzhou, Jiangsu 215000 (CN)
(74) Representative: Seemann & Partner Patentanwälte mbB
(86) International application number: PCT/CN2023/070997
(87) International publication number: WO 2023/246082

(57) **Abstract**

The present invention relates to a hot working tool steel, a heat treatment method thereof, and a hot working tool. The hot working tool steel has a chemical composition, in weight percent, of: Ni: 4.5-12%, Al: 0.8-2.1% and Al:Ni=0.075-0.234, Cu: 0.4-1.99%, Mn: 0.001-1%, C: 0.0001-0.1%, with the balance being Fe and unavoidable impurities. The heat treatment method includes a hardening step, wherein: when 0.4% ≤ Cu < 0.8%, the hot working tool steel is heated to a temperature in the range of 560-650°C; when 0.8% ≤ Cu < 1.5%, the hot working tool steel is heated to a temperature in the range of 470-580°C; and when 1.5% ≤ Cu ≤ 1.99%, the hot working tool steel is heated to a temperature in the range of 450-520°C; and held for 1-240 hours, preferably 4-24 hours, and then cooled to room temperature.

## Description

### Technical Field

The present invention relates to a hot-working die steel, a heat treatment method and a hot-working mold.

### Background

Hot-working die steel is an alloyed tool steel that selectively adds different weight percentages of alloying elements such as carbon, silicon, chromium, tungsten, molybdenum, nickel, manganese, vanadium, cobalt, etc. to iron, and is often made into molds used to shape materials during die-casting, forging, and extrusion. In recent years, the forming technology of advanced high-strength steel plates for automobiles that can simultaneously meet the requirements of lightweight and safety - hot stamping forming technology - has put forward new requirements and challenges for mold steel.

The thermal conductivity of commonly used hot-working die steels at room temperature ranges from 18 to 24 W/mK. Generally, beyond a certain temperature, the thermal conductivity decreases as the temperature increases. During service, hot-working molds are subjected to high thermal and mechanical loads at elevated temperatures, which can lead to thermal shock or thermal fatigue caused by thermal gradients. On one hand, high temperatures reduce the thermal conductivity of the hot-working molds, leading to differences in thermal expansion due to temperature gradients, which can cause thermal fatigue cracks in the hot-working molds, shortening its service life. On the other hand, at high temperatures, the hardness of the precipitated carbides, which are crucial for ensuring wear resistance, decreases, leading to lower wear resistance of the hot work die at elevated temperatures.

It is well known that the higher the thermal conductivity of a material, the lower the thermal gradient, which results in lower surface loads and reduced thermal shock and thermal fatigue, thereby improving the hot-working mold's service life. Therefore, hot-working die steels with high thermal conductivity, high hardness, and high toughness are desired to enhance the hot-working mold's resistance to thermal cracking and wear, thus extending its service life. Furthermore, the high thermal conductivity of hot-working molds can accelerate cooling during the production process, thereby reducing the cycle time of the hot work die.

US 9689061 B2 discloses a high thermal conductivity alloy tool steel, with the following chemical composition in weight percent: C: 0.26-0.55%, Cr: <2%, Mo: 0-10%, W: 0-15%, Mo+W: 1.8-15%, Ti+Zr+Hf+Nb+Ta: 0-3%, V: 0-4%, Co: 0-6%, Si: 0-1.6%, Mn: 0-2%, Ni: 0-2.99%, S: 0-1%, with the balance being Fe and unavoidable impurities. The patent teaches that after solution treatment and quenching, the carbides of Mo and W replace those of Cr, thereby increasing thermal conductivity of the alloy tool steel. However, the size of Mo and W carbides is difficult to control, especially when primary carbides that have not dissolved after solution treatment are approximately 3 µm in size. These large carbides can become fatigue crack initiation sites, which not only severely affect the fatigue life of the tool steel but also significantly degrade its toughness. Domestic researchers have found that although the thermal conductivity of this high thermal conductivity alloy tool steel is approximately 47 W/mK at room temperature, its thermal conductivity decreases as the temperature increases. At 300°C, the thermal conductivity drops to below 39 W/mK, and at 500°C, the thermal conductivity is only 35 W/mK. Moreover, when the hardness exceeds 50 HRC, the impact toughness (measured by the 7×10 mm notched specimen) is less than 210 J. When used at high temperatures, this high thermal conductivity alloy tool steel loses the advantages of its high thermal conductivity, failing to achieve the optimal performance combination of high thermal conductivity, high toughness, and high hardness.

CN 108085587 A discloses a high-temperature thermal conductivity and long-service-life die steel for die casting, along with its manufacturing method. The chemical composition of this high thermal conductivity, long-service-life die casting hot work die steel, in weight percentage, is as follows: C: 0.35-0.45%, Si: 0.20-0.30%, Mn: 0.30-0.40%, Ni: 0.50-1.20%, Cr: 1.5-2.2%, Mo: 2-2.6%, W: 0.0001-1.0%, Ti: 0-0.40%, V: 0.30-0.50%, B: 0.0001-0.003%, Cu: 0.005-0.02%, with the balance being Fe and unavoidable impurities. This patent also employs Mo and W carbides to replace Cr carbides. However, several issues exist: 1) The size of the carbides is difficult to control, and excessively large carbides degrade toughness; 2) The addition of Ti leads to the formation of liquid-phase TiN and oversized TiC, which worsens toughness; 3) The Cr element cannot be completely precipitated as carbides from the matrix, preventing the achievement of high thermal conductivity; 4) The multiple tempering processes are complex, and care must be taken to avoid the secondary hardening peak, as this results in maximum hardness but the poorest toughness. In the preferred embodiment of the patent, the example steel's U-notch impact test shows an impact energy of no more than 50 J, and the maximum thermal conductivity is 35.982 W/mK, which still fails to achieve an optimal performance balance of high thermal conductivity, high toughness, and high hardness.

CN 104046917 B discloses an ultra-high-strength ferritic steel strengthened by nano-sized intermetallic compounds. The chemical composition of this ultra-high-strength ferritic steel, in weight percentage, is as follows: C: 0-0.2%, Cu: 0.5-5%, Ni: 0.01-4%, Mn: 0.01-4%, Al: 0.001-2%, Cr: 0-12%, Mo: 0-3%, W: 0-3%, Mo+W not less than 0.05%, V: 0-0.5%, Ti: 0-0.5%, Nb: 0-0.5%, V+Ti+Nb not less than 0.01%, Si: 0-1%, B: 0.0005-0.05%, P ≤ 0.04%, S ≤ 0.04%, N ≤ 0.04%, O ≤ 0.05%, with the balance being Fe and unavoidable impurities. This patent teaches that after rolling, the steel undergoes solid solution treatment and aging, resulting in a ferritic steel primarily strengthened by nano-sized intermetallic compounds, in combination with grain refinement, solid solution strengthening, and dislocation strengthening. This results in excellent strength-toughness balance, weldability, and corrosion resistance.

However, because most of the alloying elements remain in solid solution within the ferrite matrix after the final heat treatment, the thermal conductivity of the ultra-high-strength ferritic steel is low. For instance, Cr, which is in the ferrite matrix and forms Cr carbides, not only has low thermal conductivity but also tends to coarsen during heat treatment, worsening the steel's toughness. Similarly, when Si, Cr, and Al elements dissolve into matrix, they severely reduce the thermal conductivity of ferrite. Furthermore, the carbides and carbonitrides of microalloying elements such as V, Ti, and Nb not only reduce the steel's thermal conductivity but also lower its toughness.

CN 105568151 B discloses an aluminum-enhanced maraging steel with the following chemical composition in weight percent: C: 0.01-0.2%, Ni: 6-24%, Mo: ≤6%, Mn: 0-4%, Al: 0.5-6%, Cr: 0-12%, Nb: ≤1.5%, Cu: 0-4%, W: 0-3%, B: 0.0005-0.05%, with the balance being Fe and unavoidable impurities. This patent removes Ti and Co from the alloy and designs a composition primarily strengthened by NiAl, combined with trace carbides and nano-sized clusters of Cu, achieving an alloy with a strength greater than 2000 MPa, elongation greater than 6%, and excellent fatigue and processing performance. However, the patent fails to properly balance the proportions of Ni, Al, and Cu, resulting in excess Al dissolving into the matrix, which leads to a significant decrease in the thermal conductivity of the matrix.

CN 111636037 A discloses a hot-working die steel with the following chemical composition in weight percent: Cu: 2-8%, Ni: 0.8-6%, and Ni:Cu ≥ 0.4, C: 0-0.2%, Mo: 0-3%, W: 0-3%, Nb: 0-0.2%, Mn: 0-0.8%, Cr: 0-1%, Al: 0-3%, and Ni:Al ≥ 2 (preferably 2-2.5), with the balance being Fe and unavoidable impurities. This patent utilizes a large amount of Cu precipitates, supplemented by NiAl precipitates and carbides, as strengthening phases to improve the hardness of the hot-working die steel. At the same time, it primarily relies on the precipitation of Cu particles from the matrix to enhance the matrix's thermal conductivity. After solution treatment and aging, the hot-working die steel exhibits the following properties: hardness ≥ 42 HRC, thermal conductivity ≥ 35 W/mK, and a room temperature impact toughness of ≥ 250 J for a 7×10 mm notched specimen. However, the patent fails to recognize the effect of Al in solid solution within the matrix on thermal conductivity, and as a result, it does not further improve the thermal conductivity of the hot-working die steel.

CN 110578103 B discloses a plastic die steel with high toughness, high polishability, and high corrosion resistance. This patent significantly improves the surface polishability and corrosion resistance of plastic die steel by adding Cu and Al, greatly extending the service life of the steel. On one hand, plastic die steel does not need to meet the performance requirements of hot-working die steels. On the other hand, although Cu, Ni, and Al elements are added, they are not properly proportioned, resulting in no significant improvement in thermal conductivity. Furthermore, other elements such as Si, Cr, and V can severely reduce thermal conductivity, meaning that this plastic die steel does not possess high thermal conductivity.

Although the prior art has provided various improved hot-working die steels, there remains a demand for hot-working die steels with high thermal conductivity, high hardness, and high toughness.

### Summary of the Invention

The present invention is made in view of the problems existing in the prior art. One objective is to provide a hot-working die steel that can achieve improved thermal conductivity and mechanical properties through a simple hardening treatment process. The chemical composition of the hot-working die steel, in weight percent, is as follows: Ni: 4.5-12%, Al: 0.8-2.1%, with Al:Ni = 0.075-0.234, Cu: 0.4-1.99%, Mn: 0.001-1%, C: 0.0001-0.1%, with the balance being Fe and unavoidable impurities.

Preferably, Al:Ni is greater than or equal to 0.075 and less than 0.18.

Preferably, Al:Ni is greater than or equal to 0.18 and less than or equal to 0.234.

More preferably, Al:Ni is greater than or equal to 0.18 and less than or equal to 0.22, and Ni is 5-9%.

Preferably, C: 0.0001~0.05%.

The chemical compositions of the hot-working die steel is designed such that, after appropriate heat treatment, all alloying elements precipitate from the matrix in the form of Cu particles and Ni(Fe, Al) intermetallic compounds. Notably, Al precipitates with Ni as intermetallic compounds even after hardening treatment, reducing lattice defects in the matrix to enhance thermal conductivity. In this application, it is considered that Al has fully precipitated from the matrix when the Al content dissolved in the matrix is ≤0.05%. These precipitates exhibit an excellent thermal conductivity, ensuring not only high hardness and toughness but also significantly improving the thermal conductivity of the hot-working die steel.

Preferably, the chemical compositions of hot-working die steel should be designed to improve its resistance to tempering. Studies have shown that by adjusting the ratio of copper to aluminum to be between 0.5 and 1, preferably between 0.4% and 1.5% of copper, the resistance to tempering of hot-working tool steel can be enhanced. More preferably, the ratio of copper to aluminum is between 0.6 and 0.9, and even more preferably, the copper content is between 0.4% and 1.2%.

Preferably, the hot-working die steel of the present invention comprises, in weight percent, 5-12% Ni, 0.8-1.5% Al wherein 0.075 ≤ Al:Ni < 0.18, 0.4-1.0% Cu wherein 0.5 < Cu:Al < 0.9, 0.001-1% Mn, 0.0001-0.1% C, and the balance Fe with incidental impurities.

Preferably, the hot-working die steel of the present invention comprises, in weight percent, 5.5-11% Ni, 1.2-2.1% Al wherein 0.18 ≤ Al:Ni ≤ 0.234, 1.0-1.9% Cu wherein 0.8 < Cu:Al < 1, 0.001-1% Mn, 0.0001-0.1% C, and the balance Fe with incidental impurities. Preferably, the hot-working die steel of the present invention comprises, in weight percent, 5.5-7.0% Ni, 1.0-1.6% Al wherein Al:Ni = 0.18-0.20, 0.4-1.0% Cu wherein 0.5 < Cu:Al < 0.9, 0.001-1% Mn, 0.0001-0.1% C, and the balance Fe with incidental impurities. Preferably, the hot-working tool steel of the present invention comprises, in weight percent, 7.5-9% Ni, 1.2-2.1% Al wherein Al:Ni = 0.20-0.234, 1.0-1.9% Cu wherein 0.8 < Cu:Al < 1, 0.001-1% Mn, 0.0001-0.1% C, and the balance Fe with incidental impurities.

Another object of the present invention is to provide a heat treatment method for the aforementioned hot-working die steel, which can be conducted on existing heat treatment and processing equipment. This method simplifies the current heat treatment process of die steel, thereby reducing costs, while also enabling the hot-working tool to possess better mechanical properties and thermal conductivity.

The heat treatment method of the present invention includes a hardening step wherein: when 0.4% ≤ Cu < 0.8%, the hot-working die steel is heated to a temperature in the range of 560-650°C; when 0.8% ≤ Cu < 1.5%, the hot-working die steel is heated to a temperature in the range of 470-580°C; and when 1.5% ≤ Cu ≤ 1.99%, the hot-working die steel is heated to a temperature in the range of 450-520°C; the steel is held for 1-240 hours, preferably 4-24 hours, and then cooled to room temperature.

On one hand, the Cu precipitates tend to coarsen with increasing Cu content and temperature, which in turn induces the coarsening of the NiAl precipitates. On the other hand, the precipitated Cu particles serve as nucleation sites for the precipitation of NiAl. At a given temperature, lower Cu content results in smaller Cu precipitates, preventing coarsening. However, excessively low Cu content hinders the precipitation of NiAl. Both factors influence the properties of the die steel. Therefore, the present invention coordinates the Cu content and hardening temperature, determining the hardening temperature based on the Cu content, so that during the hardening process, the synergistic effect of Cu content and temperature promotes the precipitation of both Cu particles and NiAl while preventing coarsening.

Preferably, the hot-working die steel is heated to a temperature in the range of 560-620°C when 0.4% ≤ Cu < 0.8%, to a temperature in the range of 480-580°C when 0.8% ≤ Cu < 1.5%, and to a temperature in the range of 450-500°C when 1.5% ≤ Cu ≤ 1.99%.

After hardening treatment, the hot-working die steel exhibits the following properties: hardness ≥ 36 HRC, room temperature thermal conductivity: 34-50 W/mK, impact energy ≥ 200 J for an unnotched specimen (7×10×55 mm), and the amount of Al dissolved in the matrix is ≤ 0.05%.

Preferably, a solution treatment step is conducted prior to the hardening step, wherein the hot-working die steel is heated to a temperature in the range of 850-950°C and held for 0.5-240 hours, followed by cooling to room temperature.

Preferably, a forging step is conducted prior to the solution treatment step, wherein the hot-working die steel is heated to a temperature in the range of 900-1150°C for forging, followed by cooling to room temperature. Preferably, the forging temperature is in the range of 950-1100°C, and even more preferably, 1000-1050°C.

Preferably, the cooling in the solution treatment and/or forging steps is initially conducted at a rate of ≤60°C/h, more preferably ≤30°C/h, to a temperature below 600°C, more preferably below 500°C, and even more preferably below 400°C, followed by air cooling to room temperature.

The heat treatment method of the present invention eliminates the need for the spheroidizing annealing process used in conventional die steels, as it utilizes the steel defined in this invention. Additionally, the solution treatment temperature is reduced from 1000-1050°C to 850-950°C, which lowers the requirements for heat treatment equipment. Furthermore, the hardening process is performed at a single temperature for an extended period. This is because the steel composition specified in this application does not contain elements capable of forming other alloy carbides, so any carbides that form can only be cementite. Due to the low carbon content in the steel, carbide growth is limited. As a result, the hardening treatment can be conducted at a single temperature for a prolonged time, simplifying the process and avoiding the need for the complex hardening procedures used in conventional hot-working die steels, which require holding at different temperatures for varying durations.

Another object of the present invention is to provide a hot-working mold made of the above-mentioned heat-treated hot-working die steel, which exhibits high hardness, high thermal conductivity, and high toughness. Preferably, the mold is resistant to high-temperature tempering (i.e., the precipitated phase is less likely to grow at high temperatures), thereby preventing the degradation of the mold's performance during service and improving its resistance to thermal fatigue. Additionally, due to the high thermal conductivity of the hot-working mold according to the present application, the production cycle time can be shortened, and production efficiency can be improved. Preferably, the hot-working die can be a hot stamping die for steel sheets, an aluminum alloy die casting die, or a hot extrusion die.

The percentages given for the chemical elements in this document refer to weight percentages. Unless otherwise specified, the preferred embodiments may be freely combined as needed.

Furthermore, those skilled in the art will appreciate that any subrange or specific value within the aforementioned ranges is applicable to the present invention. For example, the range of 0.075-0.18 (excluding 0.18) includes any subrange or specific value within it, such as 0.075, 0.08, 0.082, 0.085, 0.088, 0.09, 0.095, 0.1, 0.13, 0.15, 0.157, 0.16, 0.165, 0.17, as well as subranges such as 0.075-0.085, 0.08-0.098, 0.09-0.14, and 0.12-0.17. Similarly, the range of 0.18-0.234 includes any subrange or specific value within it, such as 0.18, 0.185, 0.19, 0.195, 0.198, 0.203, 0.207, 0.213, 0.215, 0.225, as well as subranges such as 0.18-0.215, 0.18-0.207, 0.185-0.225, 0.19-0.225, and 0.19-0.22. Likewise, the range of 0.5-1 (excluding the endpoints) includes any subrange or specific value within it, such as 0.56, 0.62, 0.69, 0.73, 0.80, 0.88, 0.90, 0.92, 0.98, as well as subranges such as 0.51-0.98, 0.56-0.92, 0.62-0.98, 0.65-0.92, and 0.65-0.9. Unless explicitly stated otherwise, all ranges include the endpoints.

### Brief Description of the Drawings

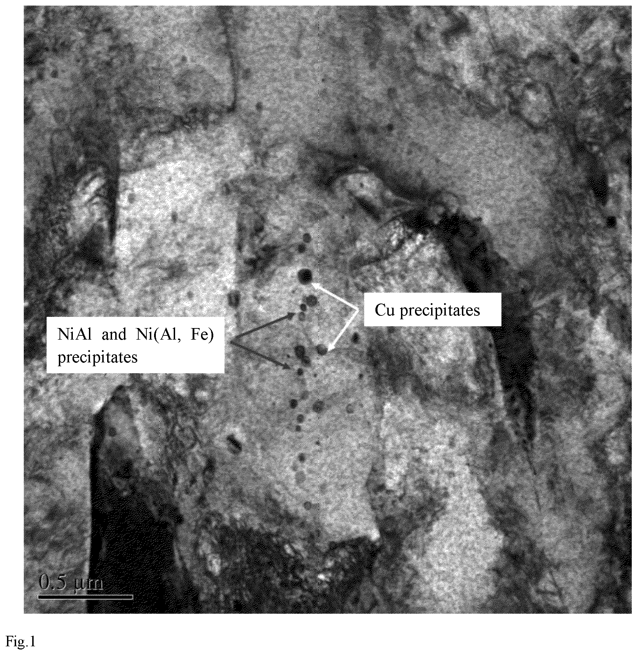

**Figure 1****:** Micrograph of Sample S3 after hardening treatment (held at 580°C for 12 hours).

### Detailed Description of the Invention

The present invention will be further described in detail below with reference to exemplary embodiments.

The chemical composition of the hot working die steel according to the present invention, in weight percent, is as follows: Ni: 4.5-12%, Al: 0.8-2.1% and Al:Ni=0.075-0.234, Cu: 0.4-1.99%, Mn: 0.001-1%, C: 0.0001-0.1%, balance Fe and incidental impurities. The roles and proportions of each element in the present invention are described below.

Ni: The primary role of nickel (Ni) in the present invention is to form NiAl intermetallic compounds, which contribute to precipitation hardening and strengthening. Additionally, Ni can suppress the formation of liquid-phase precipitation of Cu at grain boundaries at high temperatures, preventing thermal cracking during high-temperature deformation and ensuring the alloy's thermal forming performance. Ni can improve the steel's hardenability, inhibit the pearlite transformation, and the Ni enriched at grain boundaries can enhance toughness. When it is desired that the steel be primarily strengthened and hardened by the precipitated NiAl intermetallic compounds, a high nickel content is necessary to allow Al to fully combine with Ni and precipitate from the matrix; otherwise, Al will remain dissolved in the matrix. This would severely reduce the thermal conductivity of the steel. To ensure the complete precipitation of Al, excess Ni dissolved in the matrix does not cause significant lattice distortion, but when Ni is in excess, it lowers the Ms temperature, and the absence of martensitic transformation during cooling can cause cracking due to the high thermal expansion coefficient of the austenite. To ensure that Al fully precipitates and prevent Ni from causing a low Ms temperature, the nickel content in the steel is between 4.5-12%. Preferably, the nickel content is 5-12%, more preferably 5-11%, and furthermore preferably 5-9%. This ensures that Al fully precipitates from the matrix, meeting the performance requirements of the present invention. Additionally, excess Ni does not improve performance and only increases alloy cost. Furthermore, excessive Ni may complicate machining, such as causing "tool sticking" during turning operations.

Al: Aluminum and nickel can form NiAl intermetallic compounds during the hardening treatment process at 400-650°C, which contributes to precipitation strengthening and hardening. Moreover, the precipitation of NiAl intermetallic compounds improves the purity of the matrix, and these compounds also have good thermal conductivity (~90 W/mK), both of which enhance the steel's thermal conductivity. To ensure that Al fully precipitates from the matrix as NiAl intermetallic compounds, excessive Al relative to Ni can lead to the following issues:
1. Al may not fully precipitate from the matrix, reducing the thermal conductivity of the steel.
2. Large AlN inclusions may form, which do not fully dissolve in austenite at high temperatures, severely damaging the steel's toughness.
3. Al, as a strong ferrite stabilizing element, increases the Ac1 and Ac3 temperatures of the steel. This requires higher temperatures for solution treatment to achieve austenitization, thus increasing manufacturing costs, energy consumption, and demands on heat treatment equipment.

When the Al content is low, complete precipitation of Al can be ensured. However, without sufficient precipitation of NiAl intermetallic compounds, the steel's hardness may not meet the required specifications. Additionally, an excess of Ni, resulting in insufficient Al, does not significantly affect the hardness, thermal conductivity, or impact toughness of the steel, but it leads to waste of Ni and increased material costs. Therefore, the aluminum content in the steel is between 0.8-2.1%, with Al:Ni = 0.075-0.234. Preferably, Al:Ni = 0.18-0.234, and further preferably, 0.18-0.22, where the ratio of Ni to Al is optimal, and the performance is maximized.

Cu: Pure copper is an excellent thermal conductor with a thermal conductivity of 398 W/mK, compared to 80 W/mK for pure iron. Copper has a high solubility in the face-centered cubic phase (austenite), but its solubility is very low in the body-centered cubic phase (ferrite and/or martensite), allowing copper particles to precipitate. The size of the precipitated ε-Cu particles ranges from 3 to 10 nm, and adding 1% by weight of Cu can increase the hardness of the matrix by approximately 100 HV. The precipitation of Cu particles from the body-centered cubic matrix (ferrite and/or martensite) reduces lattice distortion and, together with the high thermal conductivity of the precipitated Cu particles, enhances the thermal conductivity of the matrix. However, the precipitation of Cu particles has a low aging temperature, and when the temperature of the matrix increases (e.g., during hardening), Cu particles grow rapidly, leading to a reduction in the hardness and strength of the steel. Moreover, during steel thermal forming processes (such as rolling, forging, etc.), Cu can easily form a liquid phase at the grain boundaries of austenite, resulting in thermal cracking during deformation, reducing the steel's plasticity and making it difficult to process. To suppress the liquid-phase precipitation of Cu at grain boundaries, a certain amount of nickel is typically added. The precipitated Cu particles provide nucleation sites for the precipitation of NiAl intermetallic compounds, thereby promoting the precipitation of NiAl. Considering the effects of Cu and the Al content in the present invention, the copper content of the steel is between 0.4 and 1.99%. To improve the aging performance, the weight ratio of Cu to Al is preferably set between 0.5 and 1 (excluding the endpoints), further preferably between 0.6 and 0.99, and/or the copper content is between 0.4 and 1.2%.

Mn: Manganese is an austenite-forming element that delays the transformation of austenite to ferrite, which is beneficial for refining the ferrite grain structure and improving the strength and toughness of the steel. Manganese dissolved in the matrix lowers the thermal conductivity of the steel. When Mn replaces some Fe and Al atoms to form Ni(Fe, Mn, Al) intermetallic compounds, it reduces the thermal conductivity of the original Ni(Fe, Al). Furthermore, when the Mn content is too high, on the one hand, residual austenite may remain in the steel, causing uneven microstructure and resulting in unstable mechanical properties; on the other hand, NiMn precipitates may form at the grain boundaries, severely impairing the mechanical properties of the steel. Therefore, the Mn content in the present invention is limited to between 0.001 and 1%.

C: Carbon is one of the most effective and economical strengthening elements in steel and is a stabilizing element for austenite. Carbon is an interstitial solid solution element, and its strengthening effect is much greater than that of substitutional solid solution elements. Carbon enhances the hardenability of the steel, and the resulting cementite or alloy carbides significantly improve the hardness of the alloy. When the carbon content increases, networked carbides and coarse cementite particles may form along the grain boundaries, which severely reduces the steel's toughness. Since the present invention relies on NiAl and Cu precipitation strengthening rather than carbide strengthening and hardening, the carbon content in the steel is kept between 0.0001 and 0.1%.

The following examples or experimental data are provided to illustrate the invention by way of example, and it should be understood by those skilled in the art that the invention is not limited to these examples or experimental data.

The present invention provides a first preferred hot working die steel, comprising by weight: Ni: 4.5-5.5%, Al: 0.8-1.3% wherein Al:Ni=0.075-0.234, Cu: 0.4-1.99% wherein 0.6≤Cu:Al≤0.99, Mn: 0.001-1%, C: 0.0001-0.1%, balance Fe and incidental impurities.

The present invention provides a second preferred hot working die steel, comprising by weight: Ni: 5.5-7.5%, Al: 1.0-1.6% wherein Al:Ni=0.075-0.234, Cu: 1.0-1.5% wherein 0.5<Cu:Al < 1, Mn: 0.001-1%, C: 0.0001-0.1%, balance Fe and incidental impurities.

The present invention provides a third preferred hot working die steel, comprising by weight: Ni: 7.5-12%, Al: 1.2-2.1% wherein Al:Ni=0.075-0.234, Cu: 1.5-1.99% wherein 0.5<Cu:Al<1, Mn: 0.001-1%, C: 0.0001-0.1%, balance Fe and incidental impurities.

According to the compositions of the exemplary steels DC1-DC8 and comparative steels CG1-CG3 shown in Table 1, the steels were melted into ingots, and then hot worked at an initial temperature of approximately 1050°C and a final temperature of approximately 950°C to obtain 80×80 mm² square billets. Subsequently, the billets were homogenized at 1030°C for 5 hours and then air-cooled to room temperature.

**Table 1 This invention shows the composition of sample steel and comparative steel (weight percentage, wt%)**

| Steel grade | Ni | Al | Cu | C | Mn | Fe | Al:Ni | Cu:Al |
|---|---|---|---|---|---|---|---|---|
| DC1 | 4.5 | 0.9 | 0.6 | 0.009 | 0.005 | Bal. | 0.20 | 0.67 |
| DC2 | 5.6 | 1.2 | 1.0 | 0.002 | 0.08 | Bal. | 0.21 | 0.83 |
| DC3 | 6.5 | 1.2 | 1.0 | 0.05 | 0.1 | Bal. | 0.18 | 0.83 |
| DC4 | 8.5 | 1.8 | 1.7 | 0.01 | 0.5 | Bal. | 0.21 | 0.94 |
| DC5 | 6.5 | 1.2 | 0.5 | 0.01 | 0.5 | Bal. | 0.18 | 0.42 |
| DC6 | 7.5 | 1.5 | 0.5 | 0.005 | 0.1 | Bal. | 0.2 | 0.33 |
| DC7 | 4.5 | 1.0 | 1.6 | 0.01 | 0.006 | Bal. | 0.22 | 1.6 |
| DC8 | 10 | 0.9 | 0.6 | 0.009 | 0.005 | Bal. | 0.09 | 0.67 |
| CG1 | 6.5 | 2.0 | 1.5 | 0.06 | 0.09 | Bal. | 0.31 | 0.75 |
| CG2 | 8.7 | 0.6 | 1.0 | 0.002 | 0.08 | Bal. | 0.069 | 1.67 |
| CG3 | 7.5 | 2 | 0.84 | 0.05 | 0.1 | Bal. | 0.27 | 0.42 |

The 80×80 mm² square billets were sectioned into 7.2×10×55 mm and ϕ12.7×2.2 mm specimens for subsequent heat treatment. The heat treatment procedure consisted of solution treatment at 950°C for a duration of 1 hour followed by quenching. This was succeeded by hardening treatment at a temperature within the range of 450-650°C for a predetermined time, after which the specimens were air cooled. The specific heat treatment parameters for both the exemplary and comparative steels are summarized in Table 2.

It should be understood that the temperature and duration of the hardening treatment are not limited to the specific temperature and duration in the embodiments, but can be selected from the following ranges: when 0.4% ≤ Cu < 0.8%, the hot working die steel is heated to a temperature within the range of 560-650°C; when 0.8% ≤ Cu < 1.5%, the hot working die steel is heated to a temperature within the range of 470-580°C; and when 1.5% ≤ Cu ≤ 1.99%, the hot working die steel is heated to a temperature within the range of 450-520°C. The heat treatment method of the present invention may optionally include other processes, such as forging. In addition, the temperature and duration of the solution treatment and/or forging processes can be selected according to actual needs.

**Table 2 Parameters for solution treatment and hardening treatment of sample steel and comparative steel**

| Steel grade | Sample number | Solid solution temperature/°C | Solid solution temperature/h | Hardening temperature/°C | Hardening time/h |
|---|---|---|---|---|---|
| DC1 | S1 | 950 | 1 | 560 | 24 |
| | CS1 | | | 460 | |
| DC2 | S2 | 950 | 1 | 480 | 48 |
| DC3 | S3 | 950 | 1 | 580 | 12 |
| | CS2 | | | 620 | |
| DC4 | S4 | 950 | 1 | 520 | 1 |
| | CS3 | | | 650 | |
| DC5 | S5 | 950 | 1 | 600 | 4 |
| DC6 | S6 | 950 | 1 | 620 | 2 |
| DC7 | S7 | 950 | 1 | 480 | 24 |
| DC8 | S8 | 950 | 1 | 560 | 24 |
| CG1 | CS4 | 950 | 1 | 580 | 12 |
| CG2 | CS5 | 950 | 1 | 480 | 48 |
| CG3 | CS6 | 950 | 1 | 580 | 12 |

Hardness measurement: After solution treatment and hardening treatment, the samples were sanded with sandpaper to a bright finish, and then subjected to hardness testing using a hardness tester (Rockwell hardness) to obtain the hardness values H_{S} after solution treatment and H_{H} after hardening treatment, as shown in Table 3.

Impact energy measurement: The 7.2 × 10 × 55 mm specimen after heat treatment according to Table 2 will be mechanically polished into a 7 × 10 × 55 mm notched impact specimen according to the North American Die Casting Association's notched impact specimen standard. Then, a 450 J pendulum notched room temperature specimen impact test will be conducted to obtain the impact energy of the specimen, as shown in Table 3.

Al content measurement: Use energy dispersive X-ray spectroscopy equipped with a transmission electron microscope to analyze the Al content in the micro area of the 7.2 × 10 × 55 mm sample after heat treatment according to Table 2. Select at least 5 locations for component testing on each sample to obtain the Al content in the matrix by averaging the Al content at different locations. The measurement results are shown in Table 3.

Thermal conductivity measurement: The thermal conductivity λ is calculated using the formula λ = α × cp × ρ × 100, where the thermal diffusivity α is in units of cm²/s, the specific heat capacity cp is in units of J/(g·K), and the density ρ is in units of g/(cm³). The resulting unit is W/(cm·K) × 100, which is converted to W/(m·K). After heat treatment as outlined in Table 2, cylindrical samples with dimensions ϕ12.7 × 2.2 mm are ground to ϕ12.7 × 2.0 mm using 1000-grit sandpaper, and thermal conductivity is measured using the DLF2800 flash thermal conductivity apparatus.

The measurement process is as follows: The sample is heated at a rate of 5 K/min from 25°C to 100°C, where it is held steady for 10 minutes, followed by the first measurement. The sample is then stabilized for another 10 minutes before the second measurement, and after a further 10-minute stabilization, the third measurement is taken. The sample is then heated at a rate of 5 K/min to 200°C, with three measurements taken following the same procedure as described above. The temperature is then successively increased to 300°C, 400°C, and 500°C, with three measurements taken at each temperature (equivalent to a 30-minute stabilization period at each measurement temperature). After completing the measurements, the sample is allowed to cool to room temperature.

Based on these measurements, the thermal diffusivity, specific heat capacity, and density at each temperature are obtained. The thermal conductivity is then calculated using the thermal diffusivity, specific heat capacity, and density data, as shown in Table 4.

Aging Test: Aging refers to the phenomenon where the strengthening effect of the second phase in the steel is weakened due to the coarsening of the second phase at different holding temperatures and holding times. The degree of aging can be expressed by the percentage decrease in hardness. For samples S4 and S7, after the solution treatment process listed in Table 2, the following hardening treatment was conducted: the samples were held at 520°C for 4 hours, 24 hours, and 48 hours, respectively, and then their hardness was measured and the percentage decrease in hardness was calculated according to the aforementioned measurement method, as shown in Table 5.

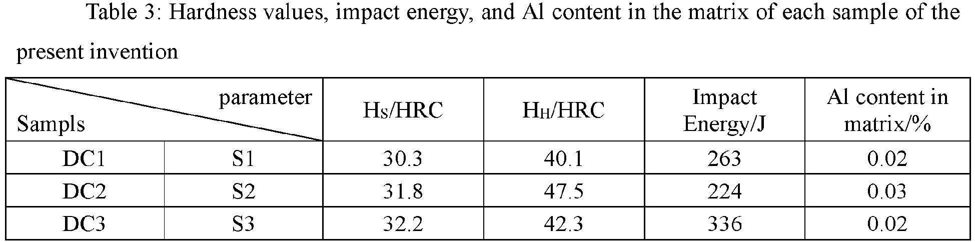

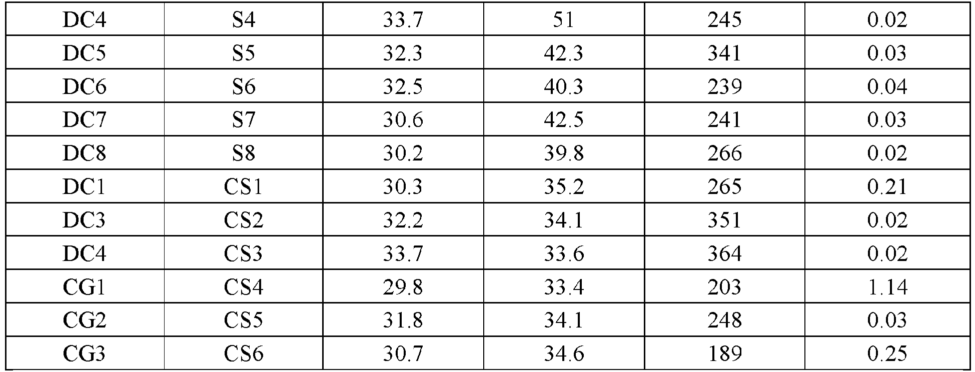

**Table 4 Thermal conductivity of each sample of the present invention, W/(mK)**

| | Temperature/°C | 25 | 100 | 200 | 300 | 400 | 500 |
|---|---|---|---|---|---|---|---|
| DC1 | S1 | 36.2 | 37.1 | 38.6 | 40.2 | 39.2 | 37.9 |
| DC2 | S2 | 40.2 | 42.4 | 43.5 | 45.3 | 44.5 | 42.9 |
| DC3 | S3 | 42.9 | 44.2 | 45.7 | 47.6 | 48.1 | 47.2 |
| DC4 | S4 | 44.3 | 47.6 | 49.1 | 50.2 | 49.4 | 48.2 |
| DC5 | S5 | 43.7 | 45.2 | 46.9 | 48.2 | 47.1 | 45.9 |
| DC6 | S6 | 45.1 | 46.3 | 47.9 | 48.5 | 49.1 | 47.6 |
| DC7 | S7 | 37.5 | 38.4 | 40.6 | 41.5 | 40.3 | 38.8 |
| DC8 | S8 | 36.2 | 37.2 | 38.6 | 40.2 | 39.2 | 37.9 |
| DC1 | CS1 | 29.1 | 29.8 | 31.1 | 32.3 | 29.4 | 28.2 |
| DC3 | CS2 | 43.2 | 44.4 | 45.6 | 47.5 | 46.3 | 44.7 |
| DC4 | CS3 | 44.8 | 46.9 | 48.8 | 50.1 | 49.3 | 48.2 |
| CG1 | CS4 | 25.8 | 27.1 | 28.6 | 30.2 | 29.1 | 27.7 |
| CG2 | CS5 | 42.7 | 43.6 | 45 | 46.2 | 43.8 | 43.1 |
| CG3 | CS6 | 27.6 | 29.3 | 30.4 | 31.3 | 30.5 | 28.9 |

**Table 5 Hardness of embodiments S4 and S7 of the present invention after aging test**

| Sample number | Hardening temperature/°C | Hardening time/h | H_{H}/HRC | Aging level |
|---|---|---|---|---|
| S4 | 520 | 4 | 50.2 | -- |
| | | 24 | 48.6 | 3.2% |
| | | 48 | 45.7 | 9.0% |
| S7 | 520 | 4 | 42.3 | -- |
| | | 24 | 35.4 | 16.3% |
| | | 48 | 31.8 | 24.8% |

### Hardness analysis

The hardness values of samples S1-S8 and CS1-CS6 after solution treatment were all below 35 HRC. This is because, through solution treatment, the precipitated phases (such as NiAl and Cu) in the microstructure dissolved into the matrix, no longer playing a role in strengthening and hardening.

After the hardening treatment, the hardness values of Examples S1-S8 and Comparative Examples CS1-CS6 all increased. Specifically, the hardness values after hardening (H_{H}) in Examples S1-S8 increased by 24% to 51.3% compared to the hardness values after solution treatment (H_{S}), reaching over 36 HRC. In contrast, the maximum increase in hardness for Comparative Examples CS1-CS6 was only 16.2%, with hardness values ranging from 33.4 HRC to 35.2 HRC, which do not meet the required specifications.

The increase in hardness is attributed to the precipitation of NiAl intermetallic compounds and Cu particles during the hardening treatment, both in Examples S1-S8 and Comparative Examples CS1-CS6. These precipitates serve to strengthen and harden the material, thereby improving the strength and hardness of the steel to some extent.

Compared to sample S1, sample S8 exhibited a higher Ni content, resulting in an Al:Ni ratio of 0.09. After undergoing the same heat treatment process as sample S1, the measured hardness H_{H}, although slightly lower than that of S1, still met the technical requirements of the invention. This indicates that a moderate excess of Ni does not significantly decrease hardness.

Similarly, the comparison between sample S2 and comparative sample CS5 also reflects the influence of excessive Ni. After undergoing the same heat treatment process, sample S2 exhibited a solution-treated hardness (H_{S}) of 31.8 HRC and a hardened hardness (H_{H}) of 47.5 HRC, representing an increase of 49.3% over H_{S}. In contrast, comparative sample CS5 showed an Hs of 31.8 HRC and an H_{H} of 34.1 HRC, representing an increase of only 6.7% over Hs. This is because, compared to sample S2, comparative sample CS5 had a lower Al content relative to Ni, resulting in a significant excess of Ni (Al:Ni was only 0.069). Although all Al could form NiAl intermetallic compounds with Ni (microanalysis revealed that the Al content in the matrix of comparative sample CS5 was 0.03%), the amount of precipitated NiAl intermetallic compounds was limited, and therefore the strengthening and hardening effects of the NiAl intermetallic compounds were also limited. Additionally, since Ni is a substitutional solid solution element, the solid solution strengthening effect is very weak, meaning that the dissolved Ni has a very limited effect on improving hardness. These two factors led to a lower H_{H}, which did not meet the usage requirements. Furthermore, the lower Al content relative to Ni resulted in excessive Ni that could not contribute to strengthening and hardening, leading to a waste of resources. Based on these findings, to ensure the precipitation of sufficient NiAl intermetallic compounds, it is desirable that Al:Ni is at least greater than 0.069.

The invention has found that when the Ni content is so high that Al:Ni is less than 0.075 (such as in comparative sample CS5), it is impossible to obtain steel with the desired performance. Therefore, to meet the technical requirements of the invention, Al:Ni must be at least greater than or equal to 0.075.

After undergoing the same heat treatment process, sample S3 exhibited an HH of 42.3 HRC, while comparative sample CS6 exhibited an H_{H} of 34.6 HRC, which is approximately 18% lower than that of sample S3. This is because, compared to sample S3, comparative sample CS6 had an excessive Al content relative to Ni, resulting in incomplete precipitation of Al from the matrix, leading to a reduced amount of NiAl precipitates and thus weaker strengthening and hardening effects, ultimately resulting in a hardness that did not meet the usage requirements. Microanalysis revealed that the Al content in the matrix of comparative sample CS6 was 0.25%, confirming that Al did not completely precipitate from the matrix. Compared to CS6, comparative sample CS4 exhibited even lower hardness. Microanalysis revealed that the Al content in the matrix of comparative sample CS4 (Al:Ni = 0.31) was 1.14%, indicating that more Al failed to precipitate from the matrix, resulting in a final hardness that did not meet the usage requirements. Based on the above, to ensure complete precipitation of Al, it is desirable that Al:Ni is less than 0.27.

The Al:Ni ratio of samples S1-S8 was in the range of 0.075-0.234. Microanalysis of the heat-treated samples S1-S8 revealed that the Al content in the matrix of samples S1-S8 was less than 0.05%, and Ni(Fe,Al), Ni(Fe,Mn,Al), and Cu particles precipitated in the matrix, as shown in Figure 1. These results indicate that when Al:Ni is in the range of 0.075-0.234, it ensures that Al can completely precipitate from the matrix in the form of NiAl intermetallic compounds, and there are sufficient precipitates to provide precipitation strengthening and hardening effects, resulting in a hardened hardness value (H_{H}) of 36 HRC or higher.

Therefore, when the composition of the steel meets the specified range, ensuring that Al:Ni is in the range of 0.075-0.234 can guarantee that the steel has the desired high hardness. Preferably, Ni:Al is 0.18-0.234, more preferably Ni:Al is 0.18-0.22, and even more preferably, the Ni content is 5-9%. In the preferred embodiments, a lower Ni content achieves the same or even higher performance.

### Impact Energy

The impact toughness of samples S1-S8 was greater than 200 J, and the corresponding hardness values (no less than 36 HRC) also met the usage requirements. This is because, for samples S1-S8, while the precipitation of Cu and NiAl contributes to strengthening, they do not serve as favorable sites for crack initiation and propagation at the interface with the matrix, thereby enabling a combination of high toughness (greater than 200 J) and high hardness (no less than 36 HRC).

In contrast, the impact toughness of comparative sample CS6 was only 189 J, and the hardness was only 34.6 HRC, failing to meet both the hardness and toughness requirements for use. Although the impact toughness of comparative samples CS1-CS5 was greater than 200 J, the corresponding hardness values were less than 36 HRC, failing to simultaneously meet the requirements of high hardness and high toughness.

### Thermal conductivity

The thermal conductivity calculated at each test temperature for Examples S1-S8 and Comparative Examples CS1-CS6 is listed in Table 4.

The thermal conductivity of Examples S1-S8 is greater than 36 W/mK in the range of 25-500 ° C. Especially at 300 ° C, the thermal conductivity of Examples S1-S8 exceeds 40 W/mK, and the thermal conductivity of Examples S2-S6 even reaches 45 W/mK or more.

Since the comparison results of thermal conductivity among all samples are similar at various temperatures, only the thermal conductivity at 300°C is discussed here as an example. Samples S1 and S8, which differ only in Ni content, exhibit similar thermal conductivity after the same heat treatment process. This indicates that when Ni is in excess to a certain extent, it does not cause a significant change in thermal conductivity relative to the Al content.

The thermal conductivity of Comparative Examples CS4 and CS6 (with Al:Ni ratios of 0.31 and 0.27, respectively) is lower than that of all Examples S1-S8, with values of only 30.2 W/mK and 31.3 W/mK, respectively. This is because, after hardening treatment, approximately 1.14% and 0.25% of Al remains dissolved in the matrix of Comparative Examples CS4 and CS6, causing severe lattice distortion and reducing thermal conductivity. As a result, Comparative Examples CS4 and CS6 exhibit neither high hardness nor high thermal conductivity.

Comparative Example CS5 exhibits a much higher thermal conductivity than CS4 and CS6. This is because all the Al in CS5 (with an Al:Ni ratio of 0.069) has fully precipitated from the matrix, and the excess Ni (relative to Al content) does not significantly affect the steel's thermal conductivity (as seen in Examples S1 and S8). However, as mentioned earlier, due to the limited precipitation of NiAl intermetallic compounds, the hardness achieved is lower and does not meet the required specifications. Therefore, Comparative Example CS5 cannot achieve both high hardness and high thermal conductivity.

From the above, it can be concluded that first, if Al is not completely precipitated from the matrix, it will significantly reduce the thermal conductivity of the matrix. Based on the hardness and thermal conductivity data of the various samples, it is evident that ensuring complete precipitation of Al from the matrix during the hardening process leads to high thermal conductivity. Second, excess Ni does not have a significant impact on thermal conductivity. Therefore, the Ni content can be adjusted according to the desired properties, provided that Al is completely precipitated from the matrix and an adequate amount of precipitates forms. To achieve both high thermal conductivity and high hardness, the Al:Ni ratio should be controlled within the range of 0.075 to 0.234. This ensures that Al precipitates entirely from the matrix in the form of NiAl intermetallic compounds, while also providing sufficient precipitates to achieve precipitation strengthening and hardening. As a result, the hardness value (H_{H}) after hardening treatment reaches over 36 HRC, and thermal conductivity exceeds 36 W/mK. Preferably, the Al:Ni ratio is between 0.18 and 0.234, with Ni content preferably between 5% and 9%, and further preferably, the Al:Ni ratio is between 0.18 and 0.22. Compared to an Al:Ni ratio of ≥0.075 but <0.18, the range of Al:Ni from 0.18 to 0.22 achieves the same thermal conductivity with a relatively lower Ni content, saving Ni, reducing costs, and decreasing the likelihood of difficulties during machining.

### Hardening treatment

To ensure the desired hardness and thermal conductivity of the steel, the choice of hardening temperature is crucial when the Al:Ni ratio is within the range of 0.075-0.234. For example, comparative sample CS1 has the same composition as sample S1 (where Al:Ni = 0.20; Cu content is 0.6%), but was held at a lower temperature (460°C) during the hardening process. On the one hand, the lower hardening temperature leads to insufficient precipitation of Cu, which in turn cannot effectively promote the precipitation of NiAl. On the other hand, the lower hardening temperature cannot provide sufficient thermodynamic driving force for NiAl precipitation. The combined effect of these two factors results in insufficient precipitation of NiAl, leading to approximately 0.21% Al remaining in the matrix of comparative sample CS1 after hardening. This, on the one hand, limits the hardening effect, resulting in low hardness of the obtained steel; on the other hand, the Al in the matrix causes lattice distortion, significantly reducing the thermal conductivity, which is only 32.3 W/mK at 300°C.

Comparative sample CS2 has the same composition as sample S3 (where Al:Ni = 0.18; Cu content is 1.0%), but was held at a higher temperature (620°C) during the hardening process. The high temperature promotes the precipitation and rapid coarsening of Cu, and in turn promotes the precipitation and coarsening of NiAl. Although Al can precipitate completely (the Al content in the matrix of comparative sample CS2 is 0.02%), the coarsening of Cu particles and NiAl precipitates reduces their strengthening and hardening effects, leading to a significant decrease in the hardness of comparative sample CS2 compared to sample S3.

Comparative sample CS3 has the same composition as sample S4 (where Al:Ni = 0.21; Cu content is 1.7%), but was held at a higher temperature (650°C) during the hardening process. The high Cu content and high hardening temperature both promote the precipitation of Cu particles and their coarsening at high temperatures. Although this promotes the complete precipitation of Al as NiAl precipitates (the Al content in the matrix of comparative sample CS3 is 0.02%), it also leads to coarsening of the NiAl precipitates, reducing their strengthening and hardening effects, thereby reducing the hardness of comparative sample CS3, with an HH of only 33.6 HRC.

It is noteworthy that comparative samples CS2 and CS3 have higher thermal conductivities, at 47 W/mK and 50 W/mK, respectively. This is because, for both of these, Al is completely precipitated from the matrix. On the one hand, the coarsening of Cu particles and NiAl precipitates does not change the thermal conductivity, and on the other hand, the high temperature causes significant recovery of dislocations in the matrix, improving the thermal conductivity of the matrix. However, as mentioned earlier, due to the excessively high hardening temperature, the hardness of both has decreased to below 35 HRC, which cannot meet the usage requirements. Comparative samples CS2 and CS3 cannot simultaneously achieve high hardness and high thermal conductivity.

From the above, it can be seen that when the composition and elemental ratios of the steel in this application meet the specified requirements, an inappropriate choice of hardening temperature will result in the steel being unable to achieve both high hardness and high thermal conductivity. Combining the data of various samples and comparative samples, it can be seen that in the case of low Cu content, the precipitated Cu particles can only promote the precipitation of NiAl to a limited extent. In this case, in order to ensure that NiAl precipitates sufficiently from the matrix, a higher hardening temperature is required to provide a large thermodynamic driving force for NiAl precipitation, in order to obtain high hardness (see samples S3 and S5). Similarly, in the case of high Cu content, the precipitated Cu particles can effectively promote the precipitation of NiAl. In this case, in order to ensure precipitation strengthening and hardening effects, a lower hardening temperature should be used to prevent the coarsening of Cu particles and NiAl precipitates (see sample S4).

Therefore, to ensure that the steel has the desired hardness and thermal conductivity, it is necessary to select a suitable hardening temperature based on the range of Cu, so that while promoting the precipitation of NiAl intermetallic compounds through Cu, the coarsening of the precipitated Cu particles and NiAl intermetallic compounds during the hardening process can be prevented. Based on the experimental data, it is stipulated that when 0.4% ≤ Cu < 0.8%, the hardening temperature is in the range of 560-650°C; when 0.8% ≤ Cu < 1.5%, the hardening temperature is in the range of 470-580°C; when 1.5% ≤ Cu ≤ 1.99%, the hardening temperature is in the range of 450-520°C.

Combining the above experimental results, it can be seen that when the composition and elemental ratios of the steel meet the specified range, by setting Al:Ni in the range of 0.075-0.234 and selecting a suitable hardening temperature, it is possible to obtain a steel with both high hardness, high toughness, and high thermal conductivity. The main reasons are summarized as follows:
1. Ni, as an iron-loving alloying element, does not reduce the thermal conductivity of the iron matrix when it is dissolved in the iron matrix in an appropriate amount;
2. During the hardening process, Al elements combine with Ni elements to form NiAl intermetallic compounds, with the chemical formula Ni(Fe,Al). Al elements dissolved in the matrix will significantly reduce the thermal conductivity of the matrix and cannot achieve the expected hardening effect. By ensuring that Al:Ni is in the range of 0.075-0.234, it is ensured that Al elements can completely precipitate from the iron matrix after hardening. Furthermore, an appropriate increase in Ni content does not significantly improve or deteriorate the technical effects of the invention, such as hardness, impact toughness, and thermal conductivity. Therefore, preferably, Al:Ni is 0.18-0.234 and Ni: 4.5-11%. More preferably, Al:Ni is 0.18-0.22 and Ni: 5-9%, and the preferred scheme achieves the same or even better technical effects at a lower Ni content;
3. The precipitation of Cu can provide nucleation sites for the precipitation of NiAl, thereby promoting the precipitation of NiAl;
4. Since the nucleation and growth of NiAl and Cu require a large driving force. By selecting a suitable hardening temperature in the range of 450-650°C according to the Cu content, both the precipitation of the precipitate phase can be promoted, and the excessive coarsening of the precipitate phase can be ensured, thereby ensuring that both hardness and thermal conductivity meet the usage requirements. For example, for sample S6 with low Cu content, by utilizing a high hardening temperature to provide a large thermodynamic driving force for NiAl precipitation, the complete precipitation of NiAl intermetallic compounds can be promoted without relying on the precipitation of Cu, ensuring hardness and thermal conductivity;
5. The high thermal conductivity of the Ni(Fe,Al) precipitates, the high thermal conductivity of the Cu precipitates, and the clean matrix all contribute to the high thermal conductivity of the steel of the present invention.

### Aging analysis

As listed in Table 5, for sample S7 (where Cu:Al is 1.6), based on its Cu content, a hardening temperature of 520°C was selected. When the hardening time was 4 hours, the hardened hardness value H_{H} obtained was 42.3 HRC. As the hardening time was extended to 24 hours and 48 hours, H_{H} decreased significantly, with aging degrees of 16.3% and 24.8%, respectively. The precipitation temperature of Cu is slightly lower than that of NiAl, making it easier to undergo aging. When Cu:Al is greater than 1, the coarsening of a large number of Cu particles also causes the coarsening of NiAl, and the coarsening of the second-phase particles Cu and NiAl leads to aging of the steel.

In contrast, for sample S4 (where Cu:Al is 0.94), the hardened hardness value H_{H} obtained when the hardening time was 4 hours was 50.2 HRC. Although HH decreased with the extension of hardening time, the HH obtained after 48 hours of hardening was still high (45.7 HRC), meeting the usage requirements, and the aging phenomenon was not obvious. Sample S4 has good resistance to aging because: on the one hand, the invention reduces the overall Cu content to 0.4-1.99% (such as S4 and S7 with Al of 1.7% and 1.6%, respectively), and selects an appropriate hardening temperature according to the Cu content, which prevents the rapidly growing of the precipitated Cu particles and in turn promotes the rapid growth of the precipitated NiAl. On the other hand, by controlling Cu:Al within the range of 0.5-1 (excluding the endpoints), the NiAl precipitate phase and Cu particles mutually restrict their aging process, so that even after a long-term hardening treatment, the aging degree is controlled within 10%, effectively improving the steel's resistance to aging.

In summary, in the heat treatment of the hot working tool steel of the present invention, the alloying elements dissolved in the solid solution can be completely precipitated from the matrix, especially the Al element. The precipitates such as Cu particles and NiAl intermetallic compounds not only have good thermal conductivity but also play a strengthening role, so that both the thermal conductivity and hardness of the hot working tool steel are increased after hardening treatment. In addition, the production process of the hot working tool steel of the present invention is simple, reducing the manufacturing cost, and can be produced on existing heat treatment and processing equipment.

The hot working tool steel of the present invention can be used for hot stamping dies for steel plates, aluminum alloy die casting, hot extrusion drawing dies, and the like.

The above embodiments and experimental data are intended to illustrate the invention by way of example only, and it should be understood by those skilled in the art that the invention is not limited to these embodiments, and various modifications can be made without departing from the scope of the invention.

## Claims

1. A hot working tool steel, wherein the chemical composition, in weight percent, is: Ni: 4.5-12%, Al: 0.8-2.1% and Al:Ni=0.075-0.234, Cu: 0.4-1.99%, Mn: 0.001-1%, C: 0.0001-0.1%, and the balance is Fe and unavoidable impurities.

2. The hot working tool steel according to claim 1, wherein 0.075 ≤ Al:Ni < 0.18.

3. The hot working tool steel according to claim 1, wherein 0.18 ≤ Al:Ni ≤ 0.234.

4. The hot working tool steel according to claim 3, wherein 0.18 ≤ Al:Ni ≤ 0.22 and Ni: 5-9%.

5. he hot working tool steel according to any one of claims 1-4, wherein 0.5 < Cu:Al < 1 and/or Cu: 0.4-1.5%.

6. The hot working tool steel according to claim 5, wherein 0.6 ≤ Cu:Al ≤ 0.9 and/or Cu: 0.4-1.2%.

7. The hot working tool steel according to any one of claims 1-4 and 6, wherein C: 0.0001-0.05%.

8. A method for heat treating the hot working tool steel according to any one of claims 1-7, comprising a hardening step: when 0.4 ≤ Cu < 0.8%, heating the hot working tool steel to a temperature in the range of 560-650°C; when 0.8 ≤ Cu < 1.5%, heating the hot working tool steel to a temperature in the range of 470-580°C; and when 1.5 ≤ Cu ≤ 1.99%, heating the hot working tool steel to a temperature in the range of 450-520°C, and holding for 1-240 hours, and then cooling to room temperature.

9. The heat treatment method according to claim 8, comprising: when 0.4% ≤ Cu < 0.8%, heating the hot working tool steel to a temperature in the range of 560-620°C; when 0.8% ≤ Cu < 1.5%, heating the hot working tool steel to a temperature in the range of 480-580°C; and when 1.5% ≤ Cu ≤ 1.99%, heating the hot working tool steel to a temperature in the range of 450-500°C and holding for 4-24 hours, and then cooling to room temperature.

10. The heat treatment method according to claim 8 or 9, further comprising: prior to the hardening step, a solution treatment step: heating the hot working tool steel to a temperature in the range of 850-950°C and holding for 0.5-240 hours, and then cooling to room temperature.

11. The heat treatment method according to claim 10, further comprising: prior to the solution treatment step, a forging step: heating the hot working tool steel to a temperature in the range of 900-1150°C for forging, and then cooling to room temperature.

12. The heat treatment method according to claim 10 or 11, wherein the cooling in the solution treatment step and/or forging step is first slowly cooled to below 600°C at a rate of ≤60°C/h, and then air cooled to room temperature.

13. The heat treatment method according to claim 8 or 9, wherein the heat-treated hot working tool steel has the following properties: hardness ≥ 36 HRC, room temperature thermal conductivity: 34-50 W/mK, notched impact energy ≥ 200 J, and the Al dissolved in the matrix ≤ 0.05%.

14. A hot working tool made of the hot working tool steel obtained by the heat treatment method according to any one of claims 8-13, **characterized in that** the hot working tool can be used as a hot stamping die for steel plates, an aluminum alloy die casting die, or a hot extrusion drawing die.
